**Europäisches Patentamt**

(19) **European Patent Office**

**Office européen des brevets**

(11) Numéro de publication: **0 003 086**

**B1**

(12) **FASCICULE DE BREVET EUROPEEN**

(45) Date de publication du fascicule de brevet: **23.09.81**

(21) Numéro de dépôt: **78400240.4**

(22) Date de dépôt: **14.12.78**

(51) Int. Cl.³: **G 01 C 19/64,**
**H 01 S 3/083**

(54) Procédé d'atténuation des erreurs de linéarité d'un gyromètre laser en anneau et dispositif pour sa mise en oeuvre.

(30) Priorité: **13.01.78 FR 7800871**

(43) Date de publication de la demande:
**25.07.79 Bulletin 79/15**

(45) Mention de la délivrance du brevet:
**23.09.81 Bulletin 81/38**

(84) Etats Contractants Désignés:
**DE GB LU**

(56) Documents cités:
**US - A - 3 533 014**
**US - A - 3 581 227**
**US - A - 3 786 368**

**ELECTRONICS LETTERS, vol. 5, n° 15,**
**24 juillet 1969**
**Herts**
**H.A.H. BOOT et al.: "Ring Laser Bias using**
**reciprocal Optical Components" pages 347 et**
**348**

(73) Titulaire: **SOCIETE FRANCAISE D'EQUIPEMENTS**
**POUR LA NAVIGATION AERIENNE (S.F.E.N.A.)**
**B.P. 59 Aérodrome de Villacoublay**
**F-78140 Velizy Villacoublay (FR)**

(72) Inventeur: **Bonfils, Georges**
**La Chevrallière**
**F-86230 St. Gervais les 3 Clochers (FR)**

(74) Mandataire: **Kavos, Stéphane**
**B.P. 59 Aérodrome de Villacoublay**
**F-78140 Velizy Villacoublay (FR)**

Courier Press, Leamington Spa, England.

Procédé d'atténuation des erreurs de linéarité d'un gyromètre Laser en anneau et dispositif pour sa mise en oeuvre.

Les spécialistes des gyromètres laser savent que, compte tenu de certains défauts de réalisation de ces appareils (retrodiffusion des miroirs en particulier), les deux faisceaux laser tournant en sens inverse se couplent plus ou moins complètement l'un à l'autre.

Il en résulte que la fréquence de battement obtenue, suivant les méthodes connues, en rendant colinéaires une partie de chacun des deux faisceaux, n'est pas proportionnelle à la vitesse de rotation du gyromètre.

Mais la courbe représentative de la fréquence de battement, en fonction de la vitesse angulaire de rotation du gyromètre, reste symétrique par rapport à l'origine.

Compte tenu de cette symétrie, le principe bien connu de la linéarisation par balayage permet de corriger le défaut résultant du couplage des deux faisceaux laser.

On peut voir le principe de cette linéarisation clairement exposée par Monsieur ARONOWITZ dans "Lasers Applications", vol. 1 — édité par Monte Ross Academic Press New-York et Londres.

La plupart des procédés connus, utilisés pour atténuer les erreurs de linéarité d'un gyromètre laser en anneau, consistent à faire une linéarisation par balayage, c'est-à-dire à superposer, au mouvement angulaire à mesurer, une oscillation angulaire symétrique.

L'un des montages connus consiste à faire osciller l'ensemble du gyromètre autour d'un axe parallèle à son axe de détection.

Ce procédé présente l'inconvénient de nécessiter une importante énergie pour faire osciller le gyromètre, compte tenu de l'importance des masses à mettre en mouvement.

D'autre part, l'oscillation de cette masse entraîne des réactions importantes sur le support qui peuvent transmettre des mouvements parasites aux autres composants de l'installation, par exemple gyromètres ou accéléromètres.

Le procédé, objet de l'invention, d'atténuation des erreurs de linéarité d'un gyromètre laser en anneau à N miroirs disposés de telle sorte que les faisceaux d'ondes laser parcourent en sens inverse deux polygones identiques, est caractérisé en ce qu'il consiste à faire osciller angulairement, par rapport au corps du gyromètre, au moins l'un des N miroirs définissant les trajectoires desdits faisceaux autour d'un axe perpendiculaire au plan défini par ces faisceaux, l'axe de rotation de chacun des miroirs oscillants étant, de préférence, aussi proche que possible de la perpendiculaire au miroir considéré passant par le point de contact des faisceaux laser avec ledit miroir.

D'autres aspects de l'invention ressortiront de la description qui va suivre des dessins annexés dans lesquels:

—la Figure 1 est une représentation schématique d'un gyromètre laser à trois miroirs dans lequel un ou plusieurs miroirs sont animés d'un mouvement oscillant.

—les Figures 2 et 3 montrent un mode de réalisation du miroir oscillant.

—les Figures 4 et 5 montrent un mode de réalisation du générateur d'oscillation du miroir.

—les Figures 6 et 7 montrent une variante de réalisation dudit générateur d'oscillation.

—la Figure 8 est un schéma d'un gyromètre laser en anneau muni d'un miroir oscillant.

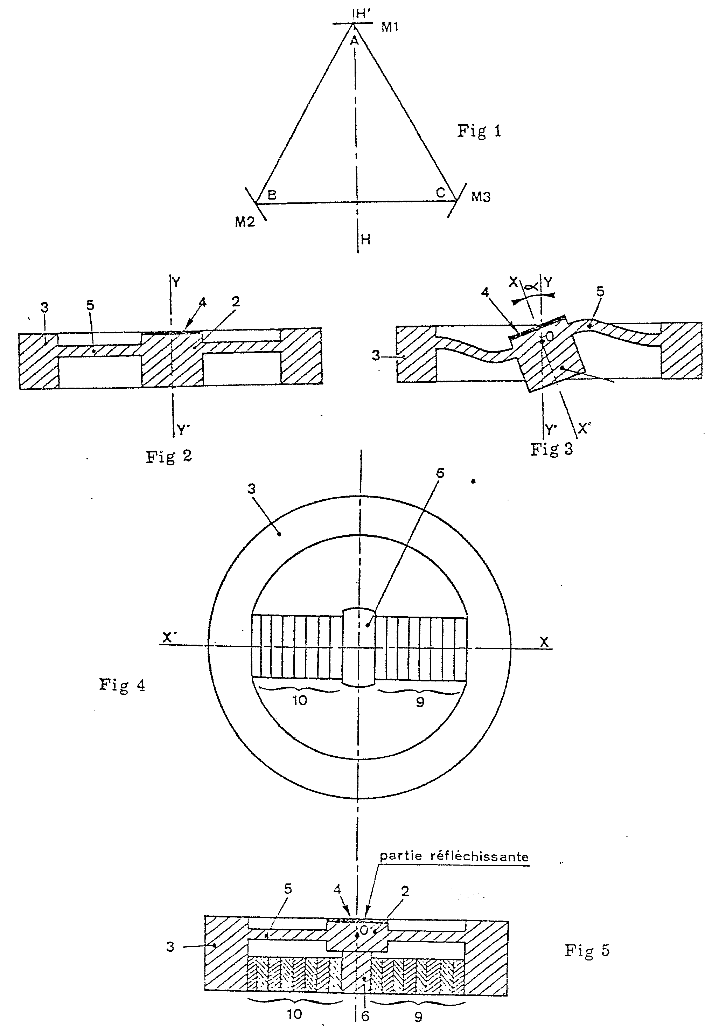

La Figure 1 montre, à titre d'exemple non limitatif, un gyromètre laser à trois miroirs M1, M2, M3 disposés suivant un triangle équilatéral.

ABC est le trajet parcouru par un premier faisceau laser en un sens, et CBA est le trajet semblable parcouru par un second faisceau laser en sens contraire.

L'axe de détection de ce gyromètre est perpendiculaire au plan de la Figure 1.

Dans ce procédé, objet de l'invention, le miroir M1 oscille autour d'un axe parallèle à l'axe de détection du gyromètre.

Il est avantageux que cet axe d'oscillation traverse le plan de la figure au voisinage de la bissectrice HH' de l'angle des faisceaux laser réfléchis par ce miroir.

Chacun des miroirs M2 et/ou M3 peut être animé d'un mouvement oscillant dont les axes d'oscillation respectifs sont définis par rapport à chacun des miroirs M2 ou M3 comme il a été décrit pour le miroir M1.

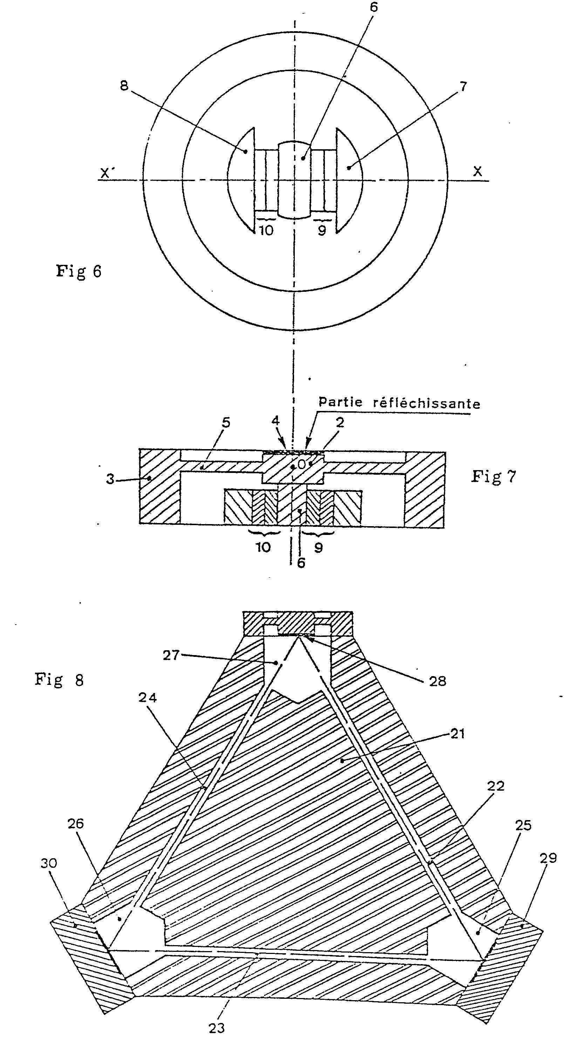

L'ensemble de la Figure 2 est cylindrique de révolution autour de l'axe YY'. Il comprend un support 3, une partie centrale 2 avec sa partie réfléchissante ou miroir 4. Les parties 2 et 3 précitées sont solidarisées entre-elles par une membrane 5 élastique pouvant être simultanément étanche mais pas obligatoirement. Par construction, ce support 3 est rendu solidaire du corps 21 du gyromètre (voir Figure 8).

Le miroir 4 est représenté en position canonique, la liaison élastique 5 non déformée les axes de la partie centrale 2 et de sa partie réfléchissante 4 sont confondus avec l'axe du support 3.

Sur la Figure 3 ce miroir est montré en position élastiquement déformée par un couple de force appliqué à la partie centrale 2 le déplaçant angulairement autour de l'axe 0, perpendiculaire au plan de la figure.

Bien entendu, la déformation est représentée, très amplifiée sur la figure, de façon à faire apparaître l'angle $\alpha$ que fait l'axe XX' de la partie réfléchissante 4 avec l'axe YY' du support 3.

Les Figures 4 et 5 mettent en évidence un mode de réalisation d'un organe actionneur ou générateur de déplacement alternatif, engendrant un mouvement de va et vient, constitué par une paire d'éléments piézo-électriques empilés: chaque pile prenant appui par l'une de ses extrêmités sur une partie en méplat prévue à cet effet sur la partie interne du support 3 précité, l'autre extrêmité étant solidaire de l'embase 6 du miroir 4.

Les Figures 6 et 7 mettent en évidence une variante de réalisation du générateur de mouvement oscillatoire. On voit sur ces figures des masselottes 7 et 8 rapportées sur la partie libre de chaque ensemble piézo-électrique solidaire de l'embase 6.

On peut voir sur la Figure 8 un corps de gyromètre 21 à trois canaux capillaires 22, 23, 24 débouchant sur trois zones creuses ou évidements obturés par trois miroirs 28, 29 et 30.

Dans le mode de réalisation, donné à titre d'exemple non limitatif, seul le miroir 28 est considéré oscillant. Ce miroir 28, ainsi que des variantes de sa réalisation, ont été détaillés sur les Figures 2 à 7.

Chacun des miroirs 29 et 30 pourrait être remplacé par un miroir équivalent au miroir 28.

Volontairement, n'ont pas été représentés: les cathodes, anodes et autres organes connus, nécessaires au fonctionnement du gyromètre.

Le fonctionnement du dispositif mettant en oeuvre le procédé objet de l'invention est le suivant: on fait osciller l'un des miroirs, par exemple le miroir M1, autour d'un axe parallèle à l'axe de détection (donc perpendiculaire au plan de la figure). Cet axe traverse le plan de la figure en un point aussi voisin que possible de la bissectrice intérieure HH' de l'angle $\widehat{BAC}$. Un calcul des chemins optiques des deux faisceaux laser, non développé dans ce document, nous a montré qu'une rotation de ce miroir autour de cet axe à la vitesse $\Omega$ engendre une variation symétrique des chemins optiques parcourus par les deux faisceaux laser, telle que la fréquence de battement obtenue en faisant interférer les deux faisceaux est sensiblement équivalente à celle qui serait obtenue en communiquant au bloc gyrométrique laser une rotation à la vitesse $\Omega/3$. Si 2, 3 ou N miroirs tournent à à la vitesse $\Omega$, ceci sera équivalent respectivement à une rotation du bloc gyrométrique à la vitesse

$$\frac{2\Omega}{N}; \quad \frac{3\Omega}{N} \quad \text{ou} \quad \frac{N\Omega}{N}$$

Il en résulte que la linéarisation par balayage est obtenue en faisant osciller ce miroir symétriquement par rapport à sa position canonique.

L'excitation des éléments piézo-électriques est faite de façon classique par une tension alternative.

Les excitations des piles 9 et 10 d'éléments piézo-électriques de même longueur initiale L sont déphasées entre-elles de 180°, de façon que, au moment où la longueur de la pile 9 passe de la valeur initiale L à une valeur $(L+\Delta L)$, la longueur de la pile 10 passe de L à $(L—\Delta L)$.

Des variations aléatoires de l'amplitude ou de la fréquence de cette oscillation améliorent la linéarisation.

Bien entendu, on peut prévoir l'oscillation simultanée de plusieurs miroirs; les effets s'ajoutent directement si les fréquences et phases des mouvements sont identiques.

Dans le mode de réalisation représenté sur les Figures 6 et 7, le mouvement de rotation du miroir est dû à la réaction des ensembles piézo-électriques qui prennent appui sur l'embase du miroir pour communiquer des accélérations aux masselottes. Il est évident que, si la masse des éléments piézo-électriques est suffisante, les masselottes peuvent être supprimées.

L'invention décrite pour un gyromètre annulaire à trois miroirs est de même applicable à un gyro laser utilisant quatre miroirs ou plus.

Bien entendu le générateur de déplacement peut être constitué indifféremment par une paire d'éléments piézo-électriques empilés, répartis de part et d'autre de l'embase 6 de la partie centrale, ou par un empilage unique d'éléments n'agissant que sur un côté de l'embase.

Dans les gyromètres laser mettant en oeuvre le procédé selon l'invention, le mouvement angulaire peut être d'amplitudes beaucoup plus faibles et de fréquences beaucoup plus élevées que dans les procédés dans lesquels on fait osciller tout le corps du gyromètre.

Cet avantage découle de la très faible inertie des pièces en mouvement.

Pour situer l'apport de l'invention du point de vue du résultat industriel, il suffit de comparer les valeurs de fréquences et d'amplitudes du procédé ancien avec celles du nouveau procédé:

| | fréquence | amplitude |
|---|---|---|
| connu | 50 à 200 Hz | 2/10 de degré ou 15mn d'angle |
| nouveau | > 10,000 Hz | de quelques sec. d'arc |

Tout autre générateur de force ou de déplacement alternatif permettant de communiquer au miroir une oscillation angulaire, telle que définie précédemment, pourrait être utilié.

**Revendications**

1. Procédé d'atténuation des erreurs de linéarité d'un gyromètre laser en anneau à N miroirs disposés de telle sorte que les faisceaux d'ondes laser parcourent en sens inverse deux polygones identiques, caractérisé en ce qu'il consiste à faire osciller angulairement, par rapport au corps du gyromètre, au moins l'un des miroirs définissant les trajectoires des deux faisceaux laser autour d'un axe perpendiculaire au plan défini par lesdits faisceaux; l'axe de rotation de chacun des miroirs oscillants étant, de préférence, aussi proche que possible de la perpendiculaire au miroir considéré passant par le point de contact des faisceaux laser avec ledit miroir.

2. Dispositif pour la mise en oeuvre du procédé selon la revendication 1, caractérisé en ce qu'il comporte pour chaque miroir oscillant un moyen élastique de liaison avec le corps du gyrométre permettant de faire osciller angulairement ledit miroir autour de son axe de rotation.

3. Dispositif selon la revendication 2, caractérisé en ce que l'effort nécessaire pour commander l'oscillation individuelle d'au moins un des miroirs est obtenu à l'aide d'un générateur de déplacement ou organe actionneur engendrant un mouvement de va et vient et prenant appui par l'une de ses extrémités sur le corps du gyromètre, l'autre extrêmité étant solidaire de l'embase du miroir.

4. Dispositif selon la revendication 2, caractérisé en ce que l'effort nécessaire pour commander l'oscillation individuelle d'au moins un des miroirs est obtenu à l'aide d'un générateur de déplacement ou organe actionneur engendrant un mouvement de va et vient et prenant appui, de façon solidaire, par une des ses extrêmités sur l'embase du miroir, l'autre extrêmité étant libre.

5. Dispositif selon la revendication 4 dans lequel l'extrêmité libre de l'organe actionneur est munie d'une masse complémentaire.

## Patentansprüche

1. Verfahren zur Verringerung der Linearitätsfehler eines Laser-Ring-Gyrometers mit n Spiegeln derart angeordnet, dass die Laserstrahlen in entgegengesetztem Richtungsinn zwei Polygone durchlaufen. Gekennzeichnet dadurch, dass mindestens einer der Spiegel, die die Bahnen der zwei Laserstrahlen bestimmen, dazu gebracht wird, im Winkel in Bezug auf den Körper des Gyrometers zu schwingen und zwar um eine, in Bezug auf die Ebene, die durch die genannten Strahlen bestimmt wird, lotrechte Achse; die Rotationsachse eiues jeden der oszillierenden Spiegel entspricht dabei so genau wie möglich der Lotrechten zum bezeichneten Spiegel und dringt durch den Auftreffpunkt der Laserstrahlen auf dem betrachteten Spiegel.

2. Vorrichtung für den Einsatz des Verfahrens entsprechend Anspruch 1, gekennzeichnet dadurch, dass für jeden der oszillierenden Spiegel ein elastisches Verbindungsmittel mit dem Körper des Gyrometers besteht, welches dem bezeichneten Spiegel ermöglicht, im Winkel um seine Rotationsachse zu schwingen.

3. Vorrichtung entsprechend Anspruch 2, gekennzeichnet dadurch, dass die Kraft, die benötigt wird um eine individuelle Oszillation von mindestens einem der Spiegel hervorzurufen, erzeugt wird mit Hilfe eines Bewegungsgenerators oder mittels eines bewegenden Elements, welches eine Vor-und Zurück-Bewegung hervorruft, und welches an einem Ende verbunden ist mit dem Körper des Gyrometers, und dessen anderes Ende fest verbunden ist mit der Basis des Spiegels.

4. Vorrichtung entsprechend Anspruch 2, gekennzeichnet dadurch, dass die Kraft die benötigt wird, um eine individuelle Schwingung won mindestens einem der Spiegel hevorzurufen, erzeugt wird mit Hilfe eines Bewegungsgenerators oder mittels eines bewegenden Elements, welches eine Hin-und Her-Bewegung hervorruft, und welches an einem Ende fest verbunden ist mit der Basis des Spiegels, und dessen anderes Ende frei ist.

5. Vorrichtung entsprechend Anspruch 4, wobei das freie Ende des bewegenden Elements mit einem Gegengewicht versehen ist.

## Claims

1. Process for attenuating the linearity errors of a ring laser gyroscope, with N mirrors arranged in such a way that the laser beams travel in opposite directions around two identical polygons, characterized by the fact that it consists in causing at least one of the mirrors defining the paths of the two laser beams to oscillate angularly with respect to the body of the rate gyro about an axis perpendicular to the plane defined by the said beams; the rotation axis of each of the oscillating mirrors being preferably as close as possible to perpendicular to the mirror in question passing through the point of contact of the laser beams with the said mirror.

2. Device resulting from the implentation of the process according to claim 1, characterized by the fact that it comprises, for each oscillating mirror, a flexible means of connection with the body of the rate gyroscope, permitting the said mirror to be oscillated angularly about its axis of rotation as defined in claim 1.

3. Device according to claim 2, characterized by the fact that the force required to control the individual oscillation of at least one of the mirrors is obtained by means of a movement generator or actuating element which generates a to and from movement and which is connected by one of its extremities to the body of the rate gyroscope, the other extremity being rigidly attached to the base of the mirror.

4. Device according to claim 2, characterized by the fact that the force required to control the individual oscillation of at least one of the mirrors is obtained by means of a movement generator or actuating element which generates a to and from movement and which is rigidly attached by one of its extremities to the base of the mirror, the other being free.

5. Device according to claim 4 in which the free extremity of the actuating element is fitted with a complementary weight.

0 003 086

Fig 1

Fig 2

Fig 3

Fig 4

partie réfléchissante

Fig 5

**0 003 086**

Fig 6

Partie réfléchissante

Fig 7

Fig 8